Europäisches Patentamt

European Patent Office

Office européen des brevets

(19)

(11) Publication number: 0 321 316
A2

# EUROPEAN PATENT APPLICATION

(12)

(21) Application number: 88312041.2

(22) Date of filing: 19.12.88

(51) Int. Cl.⁴: **F 16 B 39/24**

(30) Priority: 17.12.87 GB 8729472
16.06.88 GB 8814274

(43) Date of publication of application:
21.06.89 Bulletin 89/25

(84) Designated Contracting States:
AT DE ES FR GB IT NL SE

(71) Applicant: **Lucas, Peter Meynell**
**Downlands Eastcott**
**Devizes Wiltshire, SN10 4PJ (GB)**

(72) Inventor: **Lucas, Peter Meynell**
**Downlands Eastcott**
**Devizes Wiltshire, SN10 4PJ (GB)**

(74) Representative: **Cline, Roger Ledlie et al**
**EDWARD EVANS & CO. Chancery House 53-64 Chancery Lane**
**London WC2A 1SD (GB)**

(54) **Locking washer.**

(57) A locking assembly has an annular washer formed with a pawl 16 having an axially displaced face for locking engagement with a recess 23 in one member 21 and a tab 14 for locking engagement with another member 11, to prevent the members 11, 21 being unscrewed. The members are preferably mutually threaded. In one arrangement there is a plurality of tabs 14 which are inwardly directed. In another arrangement the tab and the pawl are closely located, conveniently at a split 15 in the washer and even more conveniently the end face of the pawl and the side of the tab define one side of the split.

Fig 2

Fig 3

Fig 14

EP 0 321 316 A2

## Description

## LOCKING WASHER

A locking washer serves to prevent rotation between two relatively rotatable members such as a nut and a bolt when they have been screwed together. The locking washer and the two members form a locking assembly.

GB-A-1428762 describes a locking washer having a single internal tab for engaging an axial recess in the shaft of a bolt and a pair of external spring tabs which are separated by a distance equal to the transverse external face-to-face separation of the nut to be used with the bolt. When the washer is located on the shank of the bolt, it is prevented from rotation relative to the bolt by the engagement of the tab with the recess in the shank of the bolt. As the nut is screwed onto the bolt and engages the washer, the corners of the nut press down the spring tabs as they rotate over the washer, the tabs springing up each time the faces of the nut are aligned with the edges of the tabs. Once the nut has been tightened, the tabs which have sprung up into engagement with two opposite faces of the nut prevent the nut being untightened, although it is possible to release the locking action by depressing the tabs so that they lie in or below the plane of the washer.

The tabs of this washer are weak in that an attempt to untighten the nut against the action of the tabs tend to tear the tabs at right-angles to the tab hinges joining them to the remainder of the washer. Furthermore, the tabs are exposed on the outside of the nut and so are easily tampered with.

Washers with a pawl action for locking to a nut or bolt head have been disclosed, in which the pawl and ratchet components are located on a radial (bearing) face of the nut or bolt head and so are not exposed to tampering, for example, in US-A-1269532 and 1956846. These washers do prevent relative rotation of the nut or bolt head, but do not however lock the nut directly to the shank of the bolt.

According to various aspects of the invention there is provided a locking assembly as claimed in any one of claims 1, 2, 4 and 5. According to other aspects of the invention there is provided a locking washer as set out in claim 7 or claim 8.

The invention may provide a locking assembly comprising a washer as set out in either aspect of the preceding sentence, a first threaded member constituting said member with which said pawl can engage. the first threaded member comprising a bearing face for engagement with said washer, the bearing face being formed with at least one recess defining a ratchet which the pawl can engage and a second member for threaded engagement with said first threaded member, said second member being formed with a recess to receive said tab on said washer so as to prevent relative rotation between the second member and the washer.

Examples of the invention will now be described with reference to the accompanying drawings in which:

Figure 1 is a transverse cross section through the shank of a first bolt,

Figure 2 is a plan of a washer for use with the first bolt,

Figure 3 is a side elevation of the washer of Figure 2,

Figures 4 to 7 are side elevations of nuts which can be used with the first bolt,

Figure 8 is an underplan of the nut of Figure 5,

Figure 9 is an underplan of the nut of Figure 7,

Figure 10 is a transverse cross section through the shank of a second bolt,

Figure 11 is a plan of a washer for use with the second bolt,

Figure 12 is a plan of a variant of the washer of Figure 11,

Figure 13 is a side elevation of a another washer, and

Figure 14 is a section through two workpieces with a locking assembly for securing them together.

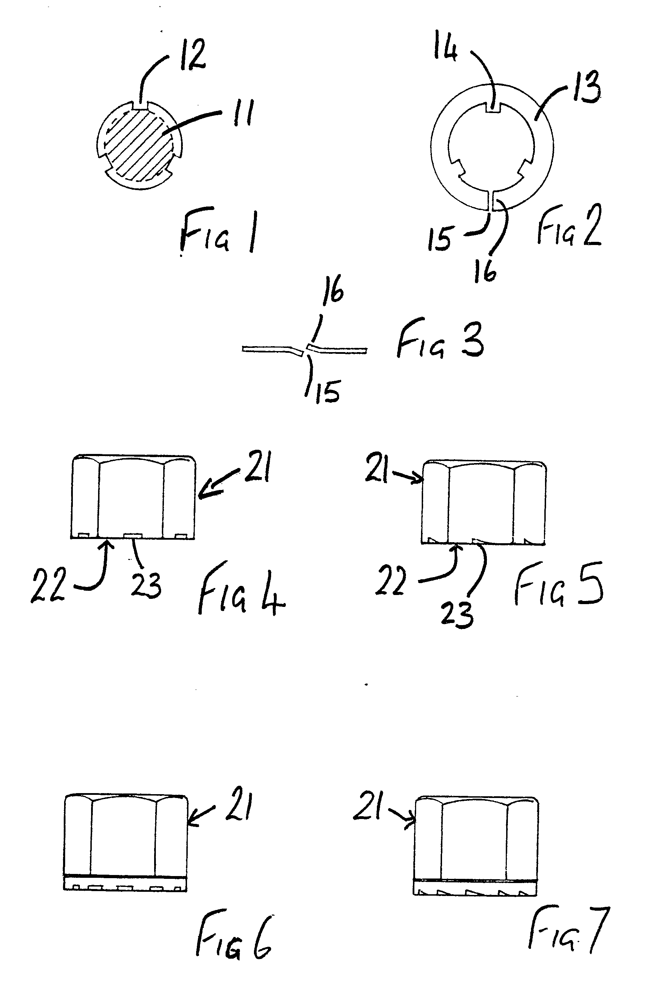

In one embodiment, a bolt has a threaded shank 11 with three recesses 12 extending parallel to the axis of the shank on opposite sides of a diameter; the recesses are shown with a rectangular section, but other sections are possible, such as triangular and semi-circular. The recesses extend from the free end of the bolt for at least part of its length. A split washer 13 is designed to be a close fit on the shank 11 and is provided with three radial tabs 14 extending inwardly to engage the axial recesses 12 in the shank 11 of the bolt. The washer has its split 15 arranged symmetrically between adjacent tabs, although the symmetrical arrangement is not essential, and, as can be seen in Figure 3, the end of the washer adjacent the split is bent up to form a pawl 16 with an engaging face facing across the split. The other end of the washer is optionally bent downwards to form a pawl which could be used if the washer became reversed. The material of at least the pawl portion of the washer is resilient; preferably the whole washer is resilient, such as of spring steel. When the washer is placed on the shank of the bolt, it is prevented from rotation in either direction relative to the shank by the engagement of the tabs 14 with the recesses 12 but is free to move axially along the shank for the length of the recesses.

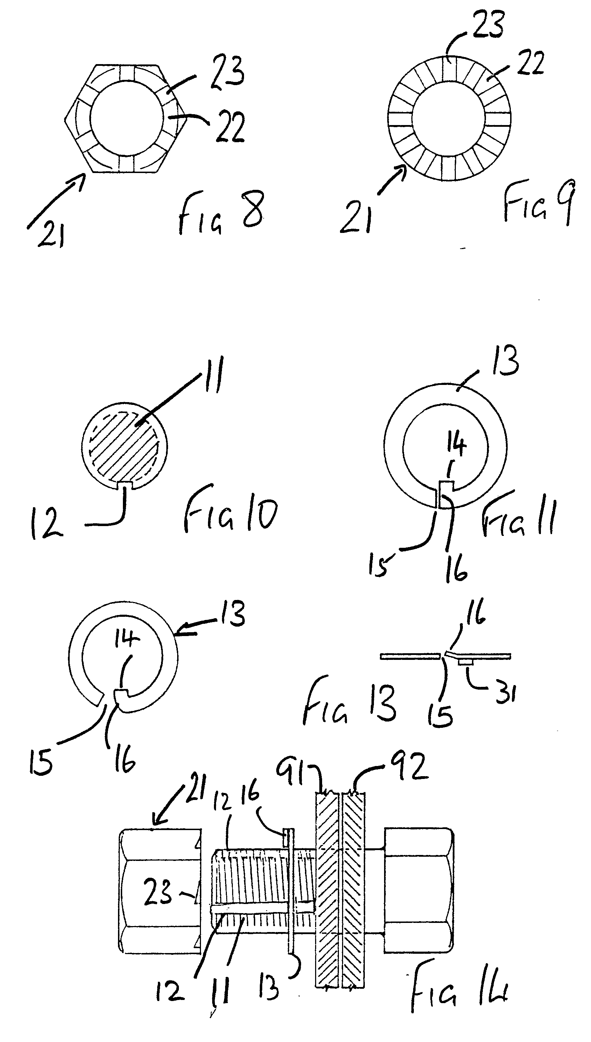

Figures 4 to 7 show alternative nuts for use with the bolt and washer of Figures 1 to 3. The nuts 21 are conventional except that they each have a bearing face 22 formed with a series of equidistantly spaced recesses 23 extending over the same annular area as that of the washer. In Figures 5 and 7, the recesses 23 have a sawtooth section in the tangential direction, one side of the sawtooth being a shoulder 24 at a large inclination to the bearing face of the nut and the other surface 25 being inclined at a small angle to the bearing face, with an approximate right angle between the surfaces. Other sections are possible, including a segment of a circle and trapezoidal (the wall corresponding to the shoulder 24 should not however cam the pawl out of the recess). In Figures 4 and 6 the recesses have a rectangular section. The locking action of the nut on the washer can be released by inserting a tool into the recess engaged by the pawl of the washer to force the pawl 16 out of engagement with the side of the recess 23 when the nut 21 has been tightened onto the washer 13, thus allowing the nut to be unscrewed relative to the washer. The use of the tool is easier when the recesses are rectangular, since there is then a gap above the pawl to facilitate insertion of the tool. If the washer is made wider than the nut, then the pawl can be depressed out of the recess by axial pressure applied outside the nut, without having to insert a tool into the recess; on the other hand if the assembly is to be tamper proof, the recesses 23 should stop short of the outer edge of the nut so that they cannot be accessed by a tool. In Figures 4 and 5 there are 6 recesses; in Figures 6 and 7 there are 12; there could be more - the higher the number, the finer control of tightness. In Figures 6 and 7 the nut has a short cylindrical portion below the hexagonal section, the recesses 23 being formed in the cylindrical portion.

The shank 11 of the bolt could be formed with a different plural number of axial recesses 12, arranged around the circumference of the shank and the washer 13 would then be formed with up to the same number of inwardly directed tabs 14 correspondingly spaced (if more than one tab). The split 15 in the washer would preferably be equidistant between two of the tabs.

As shown in Figure 14, the shank 11 of the bolt is passed through holes in two items 91, 92 to be clamped together, after which the washer 13 is placed on the shank of the bolt with the tabs 14 engaging the axial recesses 12. The nut 21 is then screwed onto the shank of the bolt, and as the nut is tightened onto the washer 13, the washer is prevented from rotation on the shank of the bolt by the engagement of the tabs 14 with the axial recesses 12 and the pawl 16 facing the nut will spring into the recesses 23 formed in the bearing face 22 of the nut. As the nut continues to rotate in the tightening direction, the portions of the bearing face between the recesses will press the pawl 16 of the washer flat until the next recess lines up with the pawl, when the pawl springs into that next recess. Whe the nut has been tightened, it is impossible to untighten it unless the pawl is released because the end of the pawl 16 engages the shoulder or side of the recess, thus preventing relative rotation of the nut to the washer and relative rotation of the washer relative to the bolt is prevented by engagement of the tabs 14 with the axial recesses 12.

So far, I have described a washer for use in locking a nut to the shank of a bolt. The nut, bolt and washer form a locking assembly. When a bolt is screwed into a threaded aperture in a workpiece, there is no nut, but the same principle may be used, the locking assembly comprising the bolt, washer and workpiece. It would be possible to form the recesses, which were formed in the nuts as described above, in the workpiece, but this is not usually practicable. A better arrangement is for the recesses described in respect of the nut above be formed on the bearing surface of the head of the bolt, for engagement with the pawl of the washer, but in this case the washer must have some other means for preventing rotation of the bolt relative to the workpiece. The washer in this case has no inwardly directed tabs (and the shank of the bolt needs no axial recesses), but instead the washer is provided with one or more axially directed tabs 31 which engage a corresponding recess or recesses in the workpiece which prevent relative rotation preferably in either direction (although preventing the washer being rotated anticlockwise relative to the workpiece by a pawl type tab would be sufficient). The head of the bolt will correspond to the nut as illustrated in any of Figures 4 to 7 and the washer can be as illustrated in Figure 13, having a pawl 16 at the split as described above and one axially directed tab 31 which is closely adjacent the pawl and on the same side of the split and which engages in a corresponding recess in the workpiece adjacent the threaded hole into which the bolt screws.

Examples of single tab washers, where the tab and pawl are closely adjacent to each other and to the split and on the same side of it, are shown in Figures 11-13. The axial tab arrangement of Figure 13 has been described in the preceding paragraph. In Figures 11 and 12, the tab is directed radially inwardly from the pawl and defines one side of the split 15. In Figure 11, since the end of the washer adjacent the split is bent out of the general plane of the washer to form the pawl, the tab itself will similarly be bent out of the plane. In Figure 12 the washer is formed out of a bar rather than a sheet, the bar forming a generally plane split ring, with one end of the bar being bent firstly out of the general plane and then radially inwardly to form the tab, the side of the tab forming the engaging face of the pawl.

In operation, the washer is placed on the workpiece around the threaded hole, with the axially directed tab in engagement with the recess. If there is a member between the washer and the workpiece which is being clamped by the bolt against the workpiece, the axial tab should extend through the member to the workpiece to form a completely locked assembly. In practice however it may be sufficient to lock the bolt to the member, since the locked assembly of bolt and member are not likely to become unscrewed by vibration from the workpiece, in which case the recess can be in the member. As the bolt is screwed into the threaded hole, its bearing surface engages the pawl which is pressed down by the portions of the bearing surface between the recesses and which springs into the recesses in turn. The pawl prevents the bolt head being unscrewed by engagement with the shoulder or side of the recess depending on the selected shape of the recess and by engagement of the axial tab 31 with the recess in the workpiece or member. As before, the pawl may be moved out of engagement with the shoulder or side of the recess by insertion of a tool into the recess, or by depressing the exposed area of an oversize washer.

The formation of the washer (whether it has radial or axial tabs) as a split annulus is convenient because the pawl can be formed at the split, but it does limit the number of pawls on one side of the washer to one, there being only one split. If pawls were formed in some other manner, for example by making a U-shape cut in the annulus and lifting the flap so formed to act as the pawl, the washer need not be split and there would be no limit to the number of pawls which could be provided on one side of the washer. A plurality of pawls increases the locking action but makes release of the lock much more complicated.

## Claims

1. A locking assembly comprising two members in threaded engagement with each other and a locking washer between the facing bearing faces of the members, the washer being formed as an annulus having a pawl with an end face displaced axially relative to the adjacent portion of the annulus beyond the pawl for engagement with the bearing face of one member to prevent rotation of the washer in one direction relative to said one member, the bearing face of said one member being formed with at least one recess defining a ratchet with which the pawl can engage, a tab for engagement with the other member to prevent rotation of the washer in the opposite direction relative to the other member, the tab and the pawl being at closely adjacent positions around the annulus.

2. A locking assembly comprising two members and a locking washer between the facing bearing faces of the members, the washer being formed as a split annulus, the split being defined at one side by a pawl with an end face displaced axially relative to the adjacent portion of the annulus beyond the pawl for engagement with the bearing face of one member to prevent rotation of the washer in one direction relative to said one member, the bearing face of said one member being formed with at least one recess defining a ratchet with which the pawl can engage, a tab for engagement with the other member to prevent rotation of the washer in the opposite direction relative to the other member, the tab and the pawl being at closely adjacent positions around the annulus.

3. An assembly as claimed in claim 1 or claim 2 wherein the annulus is split, the split being defined on one side by the pawl.

4. A locking assembly comprising two members in threaded engagement with each other and a locking washer between the facing bearing faces of the members, the washer being formed as an annulus having a pawl with an end face displaced axially relative to the adjacent portion of the annulus beyond the pawl for engagment with the bearing face of one member to prevent rotation of the washer in one direction relative to said one member, the bearing face of said one member being formed with at least one recess defining a ratchet with which the pawl can engage, the washer comprising a plurality of tabs for engagement with the other member to prevent rotation of the washer in the opposite direction relative to the other member.

5. A locking assembly comprising two members and a locking washer between the facing bearing faces of the members, the washer being formed as a split annulus having a pawl at the split with an end face displaced axially relative to the adjacent portion of the annulus beyond the pawl for engagement with the bearing face of one member to prevent rotation of the washer in one direction relative to said one member, the bearing face of said one member being formed with at least one recess defining a ratchet with which the pawl can engage, the washer comprising a plurality of tabs for engagement with the other member to prevent rotation of the washer in the opposite direction relative to the other member.

6. An assembly as claimed in any one of claims 3 to 5 wherein the split is defined on one side by a combined pawl and tab.

7. A locking washer comprising an annulus formed with a radial inwardly directed tab and with a pawl having an end face displaced axially relative to the adjacent portion of the annulus beyond the pawl for engagement with a member to prevent rotation of the washer in one direction relative to the member, the tab and the pawl being at closely adjacent positions around the annulus.

8. A locking washer comprising an annulus formed with a plurality of inwardly directed tabs and with a pawl having an end face displaced axially relative to the adjacent portion of the annulus beyond the pawl for engagement with a member to prevent rotation of the washer relative to the member.

9. A washer as claimed in claim 8 wherein the annulus is split and the split is defined on one side by a combined pawl and tab.

10. A locking assembly comprising a washer as claimed in either of claims 6 and 7, a first threaded member constituting said member with which said pawl can engage, the first threaded member comprising a bearing face for engagement with said washer, the bearing face being formed with at least one recess defining a ratchet with which the pawl can engage, and a second member for threaded engagement with said threaded member, said second member being formed with a recess to receive said tab on said washer so as to prevent relative rotation between the second member and the washer.

Fig 1

Fig 2

Fig 3

Fig 4

Fig 5

Fig 6

Fig 7

Fig 8

Fig 9

Fig 10

Fig 11

Fig 13

Fig 14